# FASCICULE DE BREVET EUROPEEN

(11) **EP 3 780 949 B1**
(45) Date de publication et mention de la délivrance du brevet: **13.12.2023**
(21) Numéro de dépôt: 19726056.5
(22) Date de dépôt: 19.04.2019
(51) Int. Cl.: A01J 25/12

(54) **INSTALLATION DE MOULAGE DE CAILLÉ POUR LA FABRICATION DE FROMAGE**
SYSTEM ZUM FÜLLEN VON FORMEN MIT KÄSEBRUCH ZUR HERSTELLUNG VON KÄSE
SYSTEM FOR FILLING MOLDS WITH CURD TO MAKE CHEESE

(30) Priorité: 19.04.2018 FR 1853449
(43) Date de publication de la demande: 24.02.2021
(73) Titulaire: Equipements Techniques des Industries Alimentaires et Connexes-TECNAL, 79000 Niort (FR)
(72) Inventeur: CRAMARD, Marc, 79000 Niort (FR)
(74) Mandataire: Germain Maureau
(86) Numéro de dépôt international: PCT/FR2019/050956
(87) Numéro de publication internationale: WO 2019/202283

(56) Documents cités:
- FR-A1- 2 560 494
- FR-A1- 2 612 735
- FR-A1- 2 779 318
- US-A- 3 242 571

## Description

L'invention se rapporte au domaine technique du moulage de fromage ou autre produit équivalent.

La présente invention concerne plus particulièrement un dispositif de moulage de caillé pour la fabrication de fromage, notamment à pâte molle.

On sait que le lait qui est utilisé dans la fabrication de fromages subit un certain nombre de préparations qui sont successivement, notamment dans le cadre de la fabrication de formages à pâtes molles, les suivantes :
- la pasteurisation, visant à débarrasser le lait de certains micro-organismes indésirables en le chauffant, le lait destiné à la fabrication du fromage pouvant passer par cette étape, qui n'est toutefois pas obligatoire, selon que l'on fabrique un fromage à partir de lait cru ou de lait pasteurisé ;
- la maturation, étape durant laquelle des ferments lactiques sélectionnés en fonction du fromage souhaité sont ajoutés au lait pour donner la texture et le goût du formage ;
- le caillage, cette étape consistant à laisser le lait coaguler grâce à l'action d'une présure, le lait se solidifiant pour devenir caillé ;
- le tranchage ou découpage du caillé, aussi appelée « décaillage » : le caillé est tranché en petits cubes réguliers avec un tranche caillé;
- le moulage : une fois le caillé obtenu et tranché, ce mélange de caillé et de lactosérum ou sérum est réparti et introduit dans des moules de formes et dimensions variables en fonction du formage souhaité ;
- l'égouttage : une fois moulé, le caillé est égoutté de sorte à séparer celui-ci du sérum, aussi appelé « petit lait » qui est un liquide issue de la coagulation du lait, ceci permettant de prolonger la conservation du fromage ; et
- le démoulage.

Cette étape de moulage du mélange de caillé et de sérum est délicate et importante dans le processus fromager.

En effet, le respect du caillé lors de son transfert dans les moules doit être assuré, afin de limiter la production de "fines" qui sont génératrices de perte de rendement.

La maîtrise du poids de chaque fromage doit être assurée, par ailleurs, notamment pour la plupart des fromages vendus à la pièce.

La composition des fromages et leur forme tendent à se diversifier, ce qui complique d'autant plus le problème des dispersions éventuelles de poids de ces fromages.

L'évacuation de l'air contenu dans les moules lors du transfert du mélange de caillé et de sérum à l'intérieur desdits moules est également une problématique étant donné que ce transfert est source d'hétérogénéité des fromages obtenus, tant en termes de poids qu'en termes de qualité de la pâte fromagère obtenue. En effet, ceci est dû au fait que des bulles de tailles diverses peuvent être emprisonnées dans le mélange de caillé et de sérum lors de ce transfert.

Pour effectuer l'étape de moulage du caillé, il est notamment connu de procéder à ce moulage soit manuellement, soit automatiquement au moyen d'une installation adaptée.

Une telle installation se compose généralement d'un moyen d'alimentation permettant de recueillir et distribuer un volume de caillé et de sérum à mouler, le moyen d'alimentation étant composé d'une trémie convergeant vers une base inférieure de distribution munie d'ouvertures de déversement et de distribution à travers lesquelles le mélange caillé et sérum s'écoule par gravité.

L'installation comprend également des moules à l'intérieur desquels le mélange de caillé et de sérum est destiné à être versé.

Il est aussi habituel d'utiliser une plaque de répartition, aussi appelée traditionnellement plaque de moulage, percée d'orifices à l'aplomb desquels sont disposés les moules lors du moulage, cette plaque de répartition permettant d'assurer une répartition du mélange de caillé et de sérum dans les différents moules prévus à cet effet.

Grâce à une telle installation, le mélange de caillé et de sérum à mouler s'écoule par gravité en dehors de la trémie par les ouvertures de distribution et vers les orifices de la plaque de répartition, lesquels permettent la répartition dudit mélange de caillé et de sérum dans les moules.

De façon connue en soi, voir par exemple le document FR2779318A, la trémie est mue par rapport à la plaque de répartition grâce à des moyens de déplacement. Plus précisément, la trémie peut être entraînée horizontalement par les moyens de déplacement en va-et-vient entre deux positions extrêmes de sorte à passer successivement à l'aplomb de tous les orifices de la plaque de répartition. Alternativement, il est connu de déplacer l'ensemble formé par la plaque de répartition et les moules par rapport à la trémie.

En pratique, dans ce genre d'installation de l'état de la technique, la plaque de répartition est constituée d'une pièce de tôlerie nécessitant l'utilisation d'une plaque différente par format de fromage souhaité. Ceci requiert notamment du temps et un lieu de stockage adéquat de ces pièces.

Par ailleurs, l'échappement de l'air contenu dans les moules lors du remplissage par le mélange de caillé et de sérum s'effectue généralement, en plus d'être évacué pour partie à travers des trous prévus dans les moules pour l'égouttage du mélange de caillé et de sérum, entre la plaque de répartition et la trémie.

Toutefois, la trémie est généralement pourvue au niveau de sa base, horizontalement autour des orifices de distribution, d'une plaque de liaison, permettant de retenir un éventuel déversement latéral ou trop-plein du mélange de caillé et de sérum hors des orifices de la plaque de répartition, sur sa surface supérieure. Même si cette plaque de liaison est très proche de la plaque de répartition, il existe un jeu vertical sensiblement inférieur au millimètre, par exemple de l'ordre de 0,5 mm.

En pratique lors du moulage, l'échappement de l'air qui n'est pas évacué par les trous d'égouttage des moules, s'échappe alors soit entre la plaque de liaison et la plaque de répartition par le jeu susmentionné soit, sous forme de bulles qui remontent dans la trémie.

De façon générale, ce jeu est configuré pour être suffisamment important pour laisser s'échapper une quantité suffisante d'air à travers lui, mais suffisamment faible pour permettre de limiter la quantité de fines produites et permettre de limiter la quantité de caillé qui pourrait circuler entre la plaque de répartition et la plaque d'échappement.

Toutefois, le réglage de la trémie de la plaque d'échappement avec la plaque de répartition est généralement délicat et dédié à chaque plaque de répartition.

Par ailleurs, la précision de la plaque de répartition est faible au regard de sa conception en tôlerie, le jeu étant difficilement maitrisable, ce qui entraîne une perte de matière (caillé, fines), et donc impacte le rendement.

Enfin, il a été constaté qu'un jeu vertical relativement faible entre la plaque de répartition et la plaque de liaison était à l'origine d'un phénomène d'étanchéité hydrostatique entre ces deux plaques de répartition et de liaison du fait d'une quantité de mélange liquide de caillé et de sérum qui s'engage dans l'interstice : le mélange de caillé et de sérum créé alors une étanchéité dans cet interstice ce qui favorise la remontée de bulle dans le mélange de caillé et de sérum contenu dans la trémie. Ceci est particulièrement préjudiciable à la recherche d'un écart type le plus faible possible entre les différentes quantités de caillé contenues dans les moules.

L'objet de la présente invention est de proposer une solution permettant de résoudre tout ou partie des inconvénients de l'art antérieur, et notamment de proposer une solution permettant le moulage du mélange de de caillé et de sérum de façon homogène par l'installation automatique, dont il résulte un écart-type faible notamment en poids entre les différents fromages ainsi obtenus.

Il existe par ailleurs un besoin d'installation de moulage facilement adaptable à une variété de formats de fromage.

À cet effet , l'invention selon la revendication 1 concerne une installation de moulage d'un mélange de caillé et de sérum, l'installation comprenant :
- un dispositif d'alimentation permettant de recueillir et distribuer un volume de caillé et de sérum à mouler, le dispositif d'alimentation comportant une trémie convergeant vers une base inférieure de distribution munie d'ouvertures de distribution,
- des moules à l'intérieur desquels le mélange de caillé et de sérum est destiné à être versé, et
- une plaque de répartition percée d'orifices à l'aplomb desquels sont disposés les moules lors du moulage, le dispositif d'alimentation étant mobile horizontalement par rapport à la plaque de répartition dans une direction de déplacement,

l'installation étant remarquable en ce que le dispositif d'alimentation comprend une plaque de liaison disposée au moins en partie autour de la base de la trémie et agencée pour être au contact avec la plaque de répartition durant le moulage du mélange de caillé et de sérum dans les moules, l'installation comprenant en outre un système d'échappement pour guider un flux d'air chassé par un moule lors de son remplissage vers au moins un moule adjacent et aval par rapport au sens de déplacement du dispositif d'alimentation.

Grâce au contact entre la plaque de liaison et la plaque de répartition, tout débordement et/ou tout écoulement de mélange de caillé et de sérum sur la plaque de répartition hors des moules est évitée.

Un tel système déchappement spécialement prévu pour évacuer l'air des moules en cours de moulage permet en outre de limiter fortement voire totalement toute création de bulles susceptibles de remonter dans la trémie.

Par ailleurs, grâce à une telle installation, il n'est plus nécessaire de régler un jeu entre la plaque de répartition et la plaque de liaison, l'utilisation de l'installation étant par conséquent simplifiée.

Avantageusement, le système d'échappement comprend des rainures d'échappement s'étendant de la base inférieure de distribution de la trémie jusqu'à ladite plaque de liaison. De telles rainures d'échappement permette de diriger facilement le flux d'air évacué. Par ailleurs, dans une telle configuration, le risque que du caillé s'engage dans les rainures et viennent les fermer de façon étanche est très faible ce qui limite le risque de création locale d'une étanchéité hydrostatique.

Dans une configuration technique particulière, au moins une rainure d'échappement est située en aval de chacune des ouvertures de distribution, lesdites rainures s'étendant dans une direction sensiblement parallèle à la direction de déplacement. Une telle configuration facilite la circulation du flux d'air chassé vers l'aval.

Selon une caractéristique avantageuse, la plaque de liaison entoure au moins en amont et en aval, de préférence sur toute sa périphérie, la base inférieure de la trémie, ceci afin d'être en contact avec la plaque de répartition en entourant sur toute sa périphérie la base inférieure de la trémie.

Avantageusement, des rainures d'échappement sont situées en aval et en amont de chacune des ouvertures de distribution, lesdites rainures s'étendant dans une direction sensiblement parallèle à la direction de déplacement. Alternativement, voire en complément, d'autres configurations de rainures peuvent être prévues, pas seulement parallèles, ces rainures débouchant en tout état de cause dans le moule aval en fonction du sens de marche de la trémie.

En effet, cela permet d'optimiser le procédé de moulage étant donné que le mouvement de la trémie par rapport à la plaque de répartition peut faire des va et vient dans le sens de direction de déplacement, et dans le sens inverse. Un moyen d'échappement disposé de part et d'autre de la trémie par rapport à la direction de déplacement permet donc une utilisation de la trémie pour mouler le caillé dans ces deux sens de déplacement.

Dans une configuration particulière, la plaque de liaison est une pièce rapportée par rapport à la trémie et en ce qu'un moyen d'étanchéité, tel qu'un joint, est interposé entre la base inférieure de distribution de la trémie et la plaque de liaison. Cela améliore encore l'étanchéité entre la plaque de liaison et la base de la trémie de sorte à limiter les pertes de caillé et de fines notamment, tout en assurant un démontage facilité en cas de nettoyage ou maintenance ou pour accéder aux ouvertures de distribution.

Le moyen d'alimentation est configuré pour que la plaque de liaison présente un degré de mobilité vertical par rapport à la base inférieure de la trémie permettant un mouvement relatif de ces deux pièces . Cela permet notamment de ne jamais avoir de jeu entre la plaque de répartition 8 et la plaque de liaison 10.

Selon une caractéristique technique, la base inférieure de la trémie et la plaque de liaison présentent chacune une surface inférieure, ces dites faces inférieures étant affleurantes.

Avantageusement, la plaque de répartition est formée par au moins :
- une cassette percée des orifices à l'aplomb desquels sont disposés les moules lors du moulage, et
- un cadre agencé pour border sur toute sa périphérie la cassette,
la cassette et le cadre comportant des moyens de coopération amovibles de sorte que la cassette et le cadre sont solidaires de façon amovible.

Une telle caractéristique est particulièrement avantageuse car cela offre la possibilité de changer les formats des cassettes de façon aisée et rapide, sans réglage, de la plaque de répartition étant donné que le cadre porté par l'installation reste identique.

Selon une caractéristique technique, la cassette et le cadre présentent chacune une surface supérieure sensiblement plane, ces dites faces supérieures étant affleurantes en position assemblée.

D'autres caractéristiques et avantages de l'invention ressortiront à la lecture de la description qui suit, donnée uniquement à titre d'exemple, en référence aux figures annexées, qui illustrent :
- figure 1, une vue schématique en coupe d'une installation de moulage d'un mélange de caillé et de sérum;
- figure 2, un schéma en perspective d'une trémie et d'une plaque de répartition de l'installation de la figure 1 ;
- figure 3, une vue d'une installation de moulage d'un mélange de caillé et de sérum selon un mode de réalisation ;
- figure 4, une vue détaillée de l'installation de moulage selon la figure 3 ;
- figure 5, 6 et 7, des vues détaillées d'un système d'échappement pour guider un flux d'air chassé par un moule lors de son remplissage d'une installation selon le mode de réalisation de la figure 3,
- figure 8, une vue de dessous du moyen d'alimentation et d'une plaque de liaison.

Sur l'ensemble de ces figures, des références identiques ou analogues désignent des organes ou ensembles d'organes identiques ou analogues.

Dans la suite du présent exposé, le vocable « caillé » sera utilisé pour désigner indifféremment le caillé ou le mélange de caillé et de sérum.

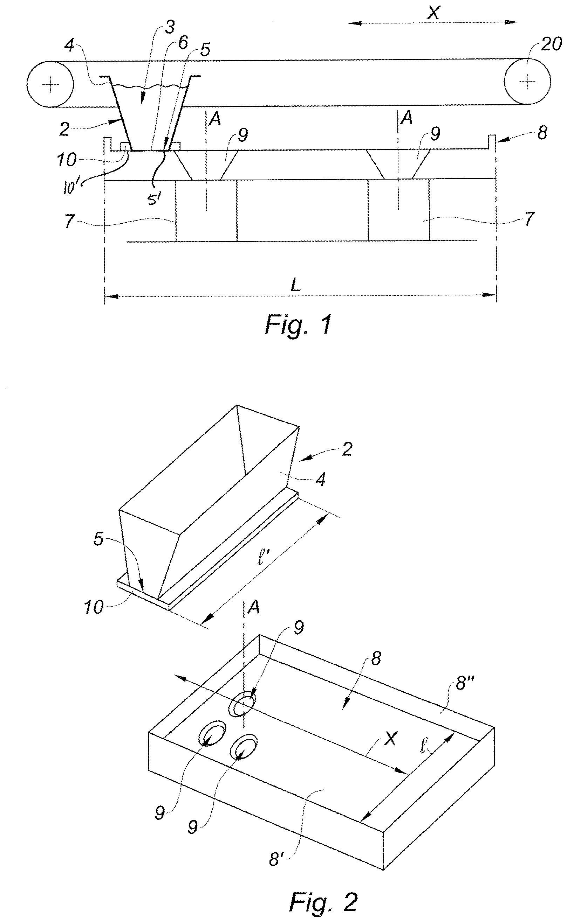

Les figures 1 et 2, illustrent des schémas simplifiés d'une installation 1 de moulage d'un mélange de caillé et de sérum 3.

L'installation 1 de moulage comprend un dispositif d'alimentation 2 permettant de recueillir et distribuer un volume de caillé et de sérum 3 à mouler. Le moyen d'alimentation 2 contient ainsi, au début d'un cycle de moulage, une quantité prédéterminée de mélange de caillé et de sérum 3 à mouler.

De manière à éviter une sédimentation du mélange de caillé et de sérum 3 à mouler dans le moyen d'alimentation 2, celui-ci est, dans un mode de mise en oeuvre du procédé, rempli juste avant le déclenchement d'un cycle de moulage, mais il peut également être alimenté et rempli en continu pendant le moulage.

Dans le mode de réalisation représenté sur ces figures 1 et 2, le moyen d'alimentation 2 comporte une trémie 4 convergeant vers une base 5 inférieure de distribution de ladite trémie. Cette base 5 inférieure de distribution est munie d'ouvertures de distribution 6 à travers lesquels le mélange de caillé et de sérum est versé par la trémie 4.

L'installation 1 de moulage comprend en outre une plaque de répartition 8 percée d'orifices 9 à l'aplomb desquels sont disposés des moules 7 lors du moulage à l'intérieur desquels le mélange de caillé et de sérum 3 est destiné à être versé.

Ces orifices 9, dans ce mode de réalisation représenté, sont tronconiques, leur ouverture supérieure étant de surface plus grande que leur ouverture inférieure.

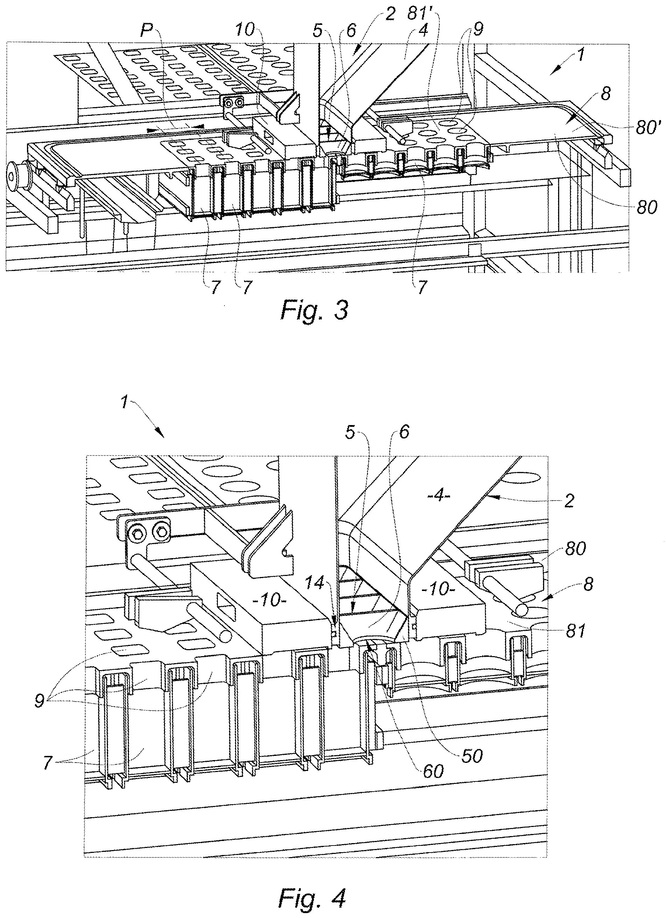

Par conséquent, l'installation 1 est configurée pour que le mélange de caillé et de sérum 3 à mouler s'écoule par gravité, en dehors de la trémie 4, au travers des ouvertures de distrubution 6 puis au travers des orifices 9 de la plaque de répartition 8, en particulier d'une cassette 81. La forme de ces orifices 9 peut varier, par exemple, ces orifices peuvent être sensiblement tubulaires et présenter une section constante, comme cela est illustré en référence au mode de réalisation des figures 3 à 8.

La trémie 4 est déplaçable par rapport à la plaque de répartition 8 dans un plan horizontal par rapport à elle, grâce à des moyens de déplacement 20. En particulier, la térmie 4 effectue une trajectoire rectiligne entre deux positions extrêmes, telles qu'une position extrême latérale gauche et une position extrême latérale droite.

En position extrême latérale gauche, tel que vu sur la figure 1, ou droite, la trémie 4 est placée au-dessus de zones latérales extrêmes de la plaque de répartition 8, ces zones latérales extrêmes étant dépourvues d'orifices 9.

La trémie 4 est entraînée par les moyens de déplacement 20, en va et vient, entre ces deux positions extrêmes, de sorte à passer à l'aplomb des orifices 9 suivant une direction de déplacement X.

Dans le mode de réalisation représenté en figures 1 et 2, la plaque de répartition 8 présente la forme d'une plaque relativement épaisse sensiblement parallélépipédique percée des orifices 9, d'axes A verticaux sensiblement parallèles entre eux et perpendiculaires à la paroi supérieure 8' de la plaque de répartition 8.

En figure 2, pour une meilleure clarté, seuls trois orifices 9 sont représentés.

Plusieurs lignes d'orifices 9 peuvent être prévues, sensiblement parallèles les unes aux autres selon la direction X de déplacement de la trémie 2 sur la plaque de répartition 8, en effectuant un mouvement de va et vient rectiligne, c'est-à-dire des allers et retours au dessus de la plaque de répartition 8.

Dans le mode de réalisation représenté, cette direction X correspond à la plus grande dimension ou longueur L de la plaque de répartition 8.

La largeur l' de la trémie 4 est, dans le mode de réalisation, sensiblement égale à la largeur l de la plaque de répartition 8, en particulier à la largeur de la surface ou paroi supérieure 8' de la plaque de répartition 8.

Le cas échéant, ainsi qu'il est représenté sur les figures 1 et 2, des parois latérales 8" sensiblement verticales forment une bordure périphérique en saillie vers le haut de la paroi supérieure 8'.

Le dispositif d'alimentation 2 comprend une plaque de liaison 10 disposée autour de la base 5 de la trémie 4 et agencée pour être au contact avec la plaque de répartition 8 durant le moulage du mélange de caillé et de sérum 3 dans les moules 7.

Cette plaque de liaison 10 permet notamment de retenir un éventuel déversement latéral ou trop-plein du mélange de caillé et de sérum 3 hors des orifices 9 de la plaque de répartition 8, sur sa surface supérieure 8'.

La plaque de liaison 10 entoure la base 5 inférieure de la trémie 4 sur toute sa périphérie de sorte qu'elle est en contact avec la plaque de répartition 8 sur une surface délimitant un contour fermé. De cette manière, la plaque de liaison 10 assure une étanchéité avec la plaque de répartition 8 évitant le déversement latéral de caillé 3.

Par ailleurs, la plaque de liaison 10 est une pièce rapportée par rapport à la trémie 4, ceci permettant de faciliter le nettoyage et la maintenance.

Enfin, le moyen d'alimentation 2 est configuré pour que la plaque de liaison 10 présente un degré de mobilité vertical par rapport à la base 5 de la trémie 4. Cela permet notamment de ne jamais avoir de jeu entre la plaque de répartition 8 et la plaque de liaison 10. En particulier, l'installation comprend des moyens d'appui pour maintenir la plaque de laison 10 en contact et en appui contre la plaque de répartition 8, ou inversement. Dans ce mode de réalisation, la plaque de liaison 10 est configurée pour que, sous l'effet de son poids, celle-ci reste en appui contre la plaque de répartition, c'est-à-dire pour que la plaque de liaison puisse venir appuyer continuement contre le plaque de répartition durant le moulage. Alternativement ou en complément, des moyens de rappels élastiques peuvent être prévus à cet effet.

Les moules 7 sont approvisionnés par le dessous du moyen d'alimentation 2 et la plaque de répartition 8 par un système de levage aussi appelé « monte et baisse ». Plusieurs moules 7 sont solidaires ensemble de sorte à former un bloc de moules ou « bloc moule » facilement manipulable.

De préférence, c'est le système de levage qui est configuré pour maintenir un contact et un appui permanent durant le moulage du bloc moule avec une face inférieure de la plaque de répartition 8.

L'installation 1 de moulage comprend des capteurs de position permettant de connaître la position des moules 7 avec la plaque de répartition 8, et notamment leur hauteur par rapport au moyen d'alimentation 2.

Afin d'améliorer encore l'étanchéité de l'installation 1 entre le moyen d'alimentation 2 et la plaque de répartition 8, un moyen d'étanchéité 13, tel qu'un joint 14, est interposé entre la trémie 4, au niveau de la base 5 inférieure de distribution, et la plaque de liaison 10. Ce joint est un joint thorique qui, grâce à son élasticité, épouse la forme du contour sensiblement de forme rectangulaire de la trémie 4 qu'il entoure.

Afin que le joint 14 reste immobile, il est logé dans une rainure périphérique 15 usinée latéralement tout autour de la trémie 4, au niveau de sa base 5 inférieure de distribution.

La base 5 inférieure de distribution comprend notamment un socle 50 dans lequel est formé les ouvertures 6 de distribution, lequel est positionné en étant encadré, entre les parois inférieures de la trémie 4 formant une bouche présentant une section sensiblement rectangulaire. En particulier, le socle 50 est libre entre ces parois inférieures de la trémie 4 au niveau de la base 5 inférieure. En effet, la présence d'un jeu permet notamment le démontage et le nettoyage. Ce socle 50 repose, sous l'effet de son propre poids, sur la plaque de répartition. De cette manière, la plaque de liaison 10 et le socle 50 de la base 5 reposent tous deux sur la plaque de répartition 8 durant le moulage, ceci sous l'effet de leur propre poids.

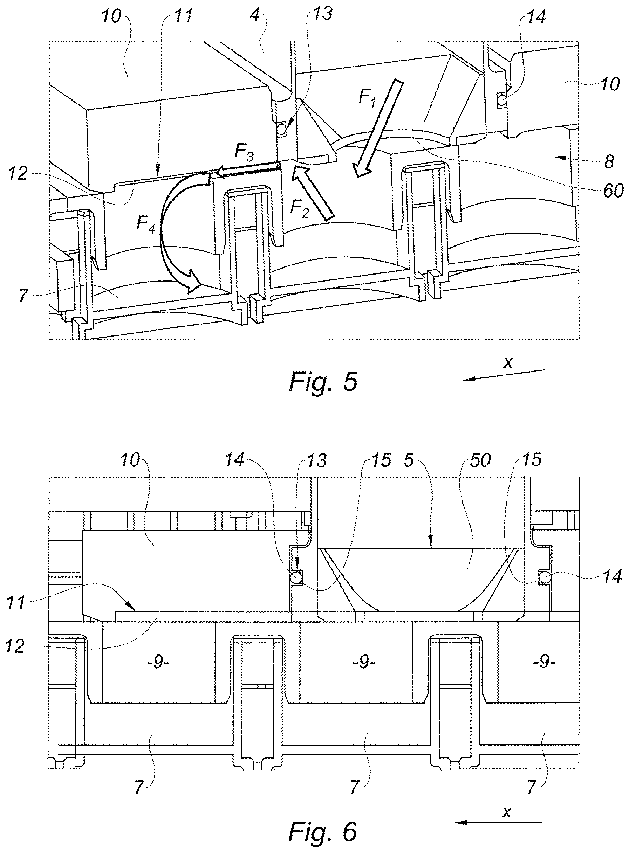

Par ailleurs, afin d'améliorer la distribution ou déversement du caillé par l'orifice de distribution 6, celui-ci présente une forme sensiblement d'entonnoir, c'est-à-dire qu'ils sont convergent vers le bas, donc vers la plaque de liaison. Comme cela est visible par exemple sur les figures 5 et 6, ces orifices de distribution 6 présentent une forme tronconique, leur ouverture supérieure étant de section plus grande que leur ouverture inférieure.

La plaque de liaison 10 et le socle 50 disposent aussi d'un degré de mobilité vertical prédéterminé de sorte que ce contact entre le socle 50 et la plaque de répartition 8 d'une part et la plaque de liaison 10 et la plaque de répartition 8 d'autre part, soit conservé. De cette manière, le système d'échappement 11 reste efficace à chaque instant durant le moulage.

La rainure périphérique 15 à l'intérieure de laquelle est logé le joint 13 est ici formée plus précisément par une cavité dans la paroi inférieure de la trémie 4.

Comme cela est illustré plus en détail sur les figures 3 à 7, l'installation 1 comprend un système d'échappement 11 pour guider un flux d'air chassé par un moule 7 lors de son remplissage vers au moins un moule 7 aval.

Le vocable « aval » est entendu ici par rapport à la direction de déplacement X de la trémie 4 par rapport à la plaque de répartition 8.

Le système d'échappement 11 comprend des rainures 12 d'échappement s'étendant de la base 5 inférieure de distribution de la trémie 4, en particulier du socle 50, jusqu'à ladite plaque de liaison 10. Ces rainures s'étendent en particulier sous la base 5 et la plaque de liaison 10.

La base 5, et en particulier le socle 50, est en contact durant le moulage avec la plaque de répartition 8 de la même façon que la plaque de liaison 10 est en contact avec la plaque de répartition 8 durant cette opération. De cette manière, le seul chemin possible pour l'air évacué du moule 7 durant le moulage est délimité par la ou les rainure(s) d'échappement 12.

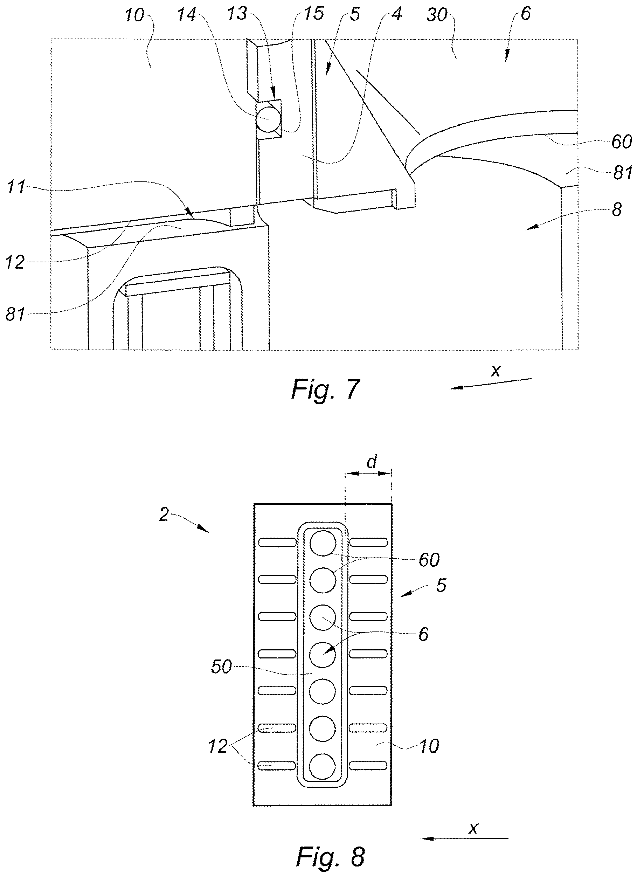

La plaque de répartition 8 présente en particulier une succession de rangées d'orifices 9, chacune espacées entre elle d'un certain pas p (voir figure 3), la plaque de liaison 10 s'étendant longitudinalement au moins en aval, mais de préférence aussi en amont, sur une distance d (voir figure 8) de préférence au moins égale à la valeur de ce pas p.

De cette manière, lorsque les ouvertures de distribution 6 sont parfaitement alignées verticalement avec les orifices 9 de la palque de répartition, l'étanchéité est assurée entre la plaque de répartition 8 et la plaque de liaison 10 et l'air contenu dans le moule 7 peut s'échapper, lors de son remplissage par déversement du mélange de caillé et de sérum 3, uniquement par les rainures 12 d'échappement.

Une symétrie de la plaque de liaison 10 et du système d'échappement 11 en amont de la base 5 avec la plaque de liaison 10 et du système d'échappement 11 en aval permet d'assurer un fonctionnement optimal du système déchappement lorsque la trémie effectue des allers et retours au dessus de la plaque de répartition dans la direction de déplacement, dans un sens et dans l'autre. Cela permet d'optimiser le temps de fabrication des fromages.

Le système d'échappement permet ainsi de guider un flux d'air chassé par un moule 7 lors de son remplissage vers au moins un moule 7 aval, dans un sens comme dans l'autre du déplacement de la trémie 4 par rapport à la plaque de répartition 8.

Dans une confuguration avantageuse, comme cela est particulièrement visible sur la figure 8, une rainure d'échappement 12 est située en aval, et en amont par symétrie, de chacune des ouvertures de distribution 6, lesdites rainures 12 s'étendant dans une direction sensiblement parallèle à la direction de déplacement X.

De cette manière, le chemin de l'air entre le moule 7 en court de remplissage et son évacuation est le plus court possible et le risque que le flux d'air se disperse, par exemple en remontant dans la trémie 4, est minimisé.

Par ailleurs, la base 5 inférieure de la trémie 4 et la plaque de liaison 10 présentent chacune une surface inférieure 5', 10', ces dites faces inférieures 5', 10' étant affleurantes.

La paroi inférieure de la trémie 4 entourant le socle de la base 5 présente une extrémité disposée sensiblement au dessus de ces surfaces inférieures 5', 10' de sorte à ne pas créer d'obstacle dans les rainures 12 d'échappement. On notera que cette paroi inférieure de la trémie 4 entourant le socle pourrait présenter une telle extrémité affleurante avec les surfaces inférieures 5', 10' mais dans ce cas, des portions de rainures doivent être usinées dans cette parois pour assurer la continuité des rainures 12 d'échappement entre la base 5, en particulier le socle 50 et la plaque de liaison 10.

La plaque de répartition 8 est quant à elle formée par une ou plusieurs cassette(s) 81 percée(s) des orifices 9 à l'aplomb desquels sont disposés les moules 7 lors du moulage, et un cadre 80 agencé pour border sur toute sa périphérie la cassette 81 lorsqu'elle est seule, ou l'ensemble des cassette 81 lorsqu'elles sont multiples.

La cassette 81 et le cadre 80 comportent des moyens de coopération amovibles 82 de sorte que la cassette 81 et le cadre 80 sont solidaires de façon amovible.

De cette manière, les réglages de l'installation par rapport à la plaque de répartition sont effectués sur le cadre 80 qui ne change pas, et il est possible de changer facilement de cassettes 81 en fonction du fromage à fabriquer. En d'autres termes, cela offre la possibilité de changer les formats des cassettes de façon aisée et rapide, sans réglage, de la plaque de répartition étant donné que le cadre porté par l'installation reste identique.

La cassette 81 et le cadre 80 présentent chacune une surface supérieure 80', 81' sensiblement plane, ces dites faces supérieures 80', 81' sensiblement étant affleurantes en position assemblée.

Durant le fonctionnement de l'installation, le caillé 3 arrive dans la trémie 4 où il est maintenu à niveau constant.

Le cadre 80 de la plaque de répartition qui supporte les deux cassettes 81 ou plus, est fixe. La base 5 de la trémie 4 qui distribue le caillé 3 est mobile et se déplace par un mouvement horizontal au-dessus des cassettes 81 ainsi que du cadre 80.

Sous l'effet du déplacement de la trémie 4 de droite à gauche, suivant sa direction de déplacement X, le caillé 3 tombe dans les moules 7.

La plaque de liaison 10, qui se déplace avec la base 5 du moyen d'alimentation 2 est posée sur la plaque de répartition 8. une étanchéité au caillé 3 est réalisée entre la trémie 4, la plaque de liaison 10, et la plaque de répartition 8, en particulier entre le cadre 80 et les cassettes 81.

La plaque de répartition 8, en particulier la cassette 81, ainsi que la plaque de liaison 10, conditionnent le bon écoulement du caillé 3 dans les moules 7 en permettant à l'air de s'échapper grâce au système d'échappement 11.

L'association de la cassette 81 avec la plaque de liaison 10 permet l'évacuation de l'air qui se trouve à l'intérieur du moule 7 via les rainures déchappement 12 situées dessous la plaque de liaison 10 permettant ainsi à l'air de s'échapper vers le moule 7 aval en fonction du sens de déplacement.

Cette gestion de fuite permet au caillé 3 qui s'échappe (fines) de rester dans le moule 7 et améliore ainsi le rendement de l'installation en limitant voire supprimant les pertes de produit.

Plus précisément, le contact maintenu entre la plaque de liaison 10 et la surface supérieure 8' de la plaque de répartition 8, en particulier la surface supérieure 81' de la cassette 81, permet un dosage affiné du volume de caillé 3 dans les moules 7 tout en minimisant au maximum les pertes de produit. L'étanchéité entre ces éléments 8, 10 notamment est ainsi bien maîtrisée.

Le contact entre la base 5, en particulier le socle 50, et la plaque de répartition 8 est au moins appliqué sur un pourtour fermé de chacune des ouvertures de distribution 6. Plus généralement, le socle 50 de la abse 5 est agencé pour ce que contact soit assuré avec la plaque de répartition 8, en particulier sa surface supérieure 8', 80', 81', au niveau de ce pourtour fermé délimitant l'ouverture de distribution 6 durant le moulage. Bien entendu, le contact n'est pas assuré sur ce pourtour fermé lorsque qu'une partie au moins de ce pourtour est à l'aplomb d'un orifice 9 de la plaque de répartition 8. Durant le déplacement de la trémie 4.

C'est le cas aussi du pourtour fermé de la plaque de liaison 10 qui est agencé pour être en contact avec la plaque de répartition 8, en particulier sa surface supérieure 8', 80', 81'.

Comme cela est illustré sur la figure 5, la flèche F1 représente le caillé 3 qui tombe dans le moule 7, les flèches F2, F3 et F4 illustrent quant à elles l'air qui s'échappe par la rainure d'échappement 12 située sous la plaque de liaison 10. Dans ce cas, la trémie 4 se déplace de la droite vers la gauche selon une direction de déplacement X sensiblement rectiligne.

Afin d'améliorer le dosage un dispositif de pesage est prévu sur l'installation, ce dispositif permettant le pesage des moules lors du remplissage.

Le dispositif de pesage est de préférence intégré au système de levage dit « monte et baisse » de sorte qu'il est possible de connaître le poids d'un bloc moules lorsque les moules sont remplis lors de la descente de l'ensemble des moules vers et sur un convoyeur d'évacuation.

La présente invention permet donc une amélioration des écarts type lors du moulage de caillé de fromage dans des moules en diminuant les pertes de produit et en améliorant l'adéquation du volume de caillé dosé et le volume du moule.

L'invention est décrite dans ce qui précède à titre d'exemple. Il est entendu que l'homme du métier est à même de réaliser différentes variantes de réalisation de l'invention sans pour autant sortir du cadre de l'invention tel que défini par les revendication ci-jointes.

## Revendications

1. Installation (1) de moulage d'un mélange de caillé et de sérum (3), l'installation (1) comprenant :
- un dispositif d'alimentation (2) permettant de recueillir et distribuer un volume de caillé et de sérum à mouler, le dispositif d'alimentation (2) comportant une trémie (4) convergeant vers une base (5) inférieure de distribution munie d'ouvertures de distribution (6),
- des moules (7) à l'intérieur desquels le mélange de caillé et de sérum (3) est destiné à être versé, et
- une plaque de répartition (8) percée d'orifices (9) à l'aplomb desquels sont disposés les moules (7) lors du moulage, le dispositif d'alimentation (2) étant mobile horizontalement par rapport à la plaque de répartition (8) dans une direction de déplacement (X),
l'installation (1) étant **caractérisée en ce que** le dispositif d'alimentation (2) comprend une plaque de liaison (10) disposée au moins en partie autour de la base (5) de la trémie (4) et agencée pour être au contact avec la plaque de répartition (8) durant le moulage du mélange de caillé et de sérum (3) dans les moules (7), l'installation (1) étant **caractérisée en ce qu'**elle comprend en outre un système d'échappement (11) pour guider un flux d'air chassé par un moule (7) lors de son remplissage vers au moins un moule (7) adjacent et aval par rapport au sens de déplacement du dispositif d'alimentation (2).

2. Installation (1) de moulage selon la revendication 1, **caractérisée en ce que** le système d'échappement (11) comprend des rainures (12) d'échappement s'étendant de la base (5) inférieure de distribution de la trémie (4) jusqu'à ladite plaque de liaison (10).

3. Installation (1) de moulage selon la revendication 2, **caractérisée en ce qu'**au moins une rainure (12) d'échappement est située en aval de chacune des ouvertures de distribution (6), lesdites rainures (12) s'étendant dans une direction sensiblement parallèle à la direction de déplacement (X).

4. Installation (1) de moulage selon la revendication 1 ou 2, **caractérisée en ce que** la plaque de liaison (10) entoure au moins en amont et en aval, de préférence sur toute sa périphérie, la base (5) inférieure de la trémie (4).

5. Installation (1) de moulage selon la revendication 4, **caractérisée** en ce des rainures (12) d'échappement sont situées en aval et en amont de chacune des ouvertures de distribution (6), lesdites rainures (12) s'étendant dans une direction sensiblement parallèle à la direction de déplacement (X).

6. Installation (1) de moulage selon l'une quelconque des revendications précédentes, **caractérisée en ce que** la plaque de liaison (10) est une pièce rapportée par rapport à la trémie (4) et **en ce qu'**un moyen d'étanchéité (13), tel qu'un joint (14), est interposé entre la base (5) inférieure de distribution de la trémie (4) et la plaque de liaison (10).

7. Installation (1) de moulage selon l'une quelconque des revendications précédentes, **caractérisée en ce que** la base (5) inférieure de la trémie (4) et la plaque de liaison (10) présentent chacune une surface inférieure (5', 10'), ces dites faces inférieures (5', 10') étant affleurantes.

8. Installation (1) de moulage selon l'une quelconque des revendications précédentes, **caractérisé en ce que** la plaque de répartition (8) est formée par au moins :
- une cassette (81) percée des orifices (9) à l'aplomb desquels sont disposés les moules (7) lors du moulage, et
- un cadre (80) agencé pour border sur toute sa périphérie la cassette (81),
la cassette (81) et le cadre (80) comportant des moyens de coopération amovibles (82) de sorte que la cassette (81) et le cadre (80) sont solidaires de façon amovible.

9. Installation (1) de moulage selon la revendication 8, **caractérisé en ce que** la cassette (81) et le cadre (80) présentent chacune une surface supérieure (80', 81') sensiblement plane, ces dites faces supérieures (80', 81') sensiblement étant affleurantes en position assemblée.

## Patentansprüche

1. Anlage (1) zum Formen einer Mischung aus Quark und Molke (3), wobei die Anlage (1) Folgendes umfasst:
- eine Zuführvorrichtung (2), die das Sammeln und Verteilen eines Volumens von zu formendem Quark und Serum ermöglicht, wobei die Zuführvorrichtung (2) einen Trichter (4) umfasst, der zu einer unteren Verteilungsbasis (5) zusammenläuft, die mit Verteilungsöffnungen (6) versehen ist,
- Formen (7), in deren Inneren die Mischung aus Quark und Molke (3) gegossen werden soll, und
- eine Verteilungsplatte (8) mit Öffnungen (9), über denen die Formen (7) beim Formen angeordnet sind, wobei die Zuführvorrichtung (2) in Bezug auf die Verteilungsplatte (8) in einer Bewegungsrichtung (X) horizontal beweglich ist,
wobei die Anlage (1) **dadurch gekennzeichnet ist, dass** die Zuführvorrichtung (2) eine Verbindungsplatte (10) umfasst, die zumindest teilweise um die Basis (5) des Trichters (4) herum angeordnet ist und so beschaffen ist, dass sie während des Formens der Mischung aus Quark und Molke (3) in den Formen (7) mit der Verteilungsplatte (8) in Kontakt steht, wobei die Anlage (1) **dadurch gekennzeichnet ist, dass** sie ferner ein Abluftsystem (11) umfasst, um einen Luftstrom, der von einer Form (7) während ihrer Befüllung ausgetrieben wird, zu mindestens einer benachbarten und in Bezug auf die Bewegungsrichtung der Zuführvorrichtung (2) stromabwärts gelegenen Form (7) zu leiten.

2. Formanlage (1) nach Anspruch 1, **dadurch gekennzeichnet, dass** das Entlüftungssystem (11) Entlüftungsnuten (12) umfasst, die sich von der unteren Verteilungsbasis (5) des Trichters (4) bis zu der Verbindungsplatte (10) erstrecken.

3. Formanlage (1) nach Anspruch 2, **dadurch gekennzeichnet, dass** mindestens eine Auslassnut (12) stromabwärts von jeder der Verteilungsöffnungen (6) angeordnet ist, wobei sich die Nuten (12) in einer Richtung erstrecken, die im Wesentlichen parallel zur Bewegungsrichtung (X) verläuft.

4. Formanlage (1) nach Anspruch 1 oder 2, **dadurch gekennzeichnet, dass** die Verbindungsplatte (10) zumindest stromaufwärts und stromabwärts, vorzugsweise über ihren gesamten Umfang, die untere Basis (5) des Trichters (4) umgibt.

5. Formanlage (1) nach Anspruch 4, **dadurch gekennzeichnet, dass** Auslassnuten (12) stromabwärts und stromaufwärts von jeder der Verteilungsöffnungen (6) angeordnet sind, wobei sich die Nuten (12) in einer Richtung erstrecken, die im Wesentlichen parallel zur Bewegungsrichtung (X) verläuft.

6. Formanlage (1) nach einem der vorhergehenden Ansprüche, **dadurch gekennzeichnet, dass** die Verbindungsplatte (10) ein in Bezug auf den Trichter (4) angebrachtes Teil ist und dass ein Dichtungsmittel (13), wie beispielsweise eine Fuge (14), zwischen der unteren Verteilungsbasis (5) des Trichters (4) und der Verbindungsplatte (10) angeordnet ist.

7. Formanlage (1) nach einem der vorhergehenden Ansprüche, **dadurch gekennzeichnet, dass** die untere Basis (5) des Trichters (4) und die Verbindungsplatte (10) jeweils eine untere Fläche (5', 10') aufweisen, wobei die unteren Flächen (5', 10') bündig sind.

8. Formanlage (1) nach einem der vorhergehenden Ansprüche, **dadurch gekennzeichnet, dass** die Verteilungplatte (8) gebildet wird durch mindestens:
- eine Kassette (81), die von Öffnungen (9) durchbrochen ist, in deren Lot die Formen (7) beim Formen angeordnet sind, und
- einen Rahmen (80), der so beschaffen ist, dass er die Kassette (81) an ihrem gesamten Umfang einfasst,
wobei die Kassette (81) und der Rahmen (80) lösbare Kooperationsmittel (82) umfassen, so dass die Kassette (81) und der Rahmen (80) lösbar miteinander verbunden sind.

9. Formanlage (1) nach Anspruch 8, **dadurch gekennzeichnet, dass** die Kassette (81) und der Rahmen (80) jeweils eine im Wesentlichen ebene Fläche (80', 81') aufweisen, wobei diese Flächen (80', 81') in zusammengebauter Position im Wesentlichen bündig sind.

## Claims

1. An installation (1) for molding a curd and serum mixture (3), the installation (1) comprising:
- a supplying device (2) allowing to collect and distribute a volume of curd and serum to be molded, the supplying device (2) comprising a hopper (4) converging towards a lower distribution base (5) provided with distribution openings (6),
- molds (7) inside which the curd and serum mixture (7) is intended to be poured, and
- a distribution plate (8) pierced with orifices (9) directly above which the molds (7) are disposed during the molding, the supplying device (2) being movable horizontally with respect to the distribution plate (8) in a direction of displacement (X),
the installation (1) being **characterized in that** the supplying device (2) comprises a connection plate (10) disposed at least in part around the base (5) of the hopper (4) and arranged to be in contact with the distribution plate (8) during the molding of the curd and serum mixture (3) in the molds (7), the installation (1) being **characterized in that** it further comprises an exhaust system (11) to guide an air flow expelled by a mold (7) during its filling towards at least one adjacent mold (7) and downstream relative to the direction of displacement of the supplying device (2).

2. The molding installation (1) according to claim 1, **characterized in that** the exhaust system (11) comprises exhaust grooves (12) extending from the lower distribution base (5) of the hopper (4) to said connection plate (10).

3. The molding installation (1) according to claim 2, **characterized in that** at least one exhaust groove (12) is located downstream of each of the distribution openings (6), said grooves (12) extending in a direction substantially parallel to the direction of displacement (X).

4. The molding installation (1) according to claim 1 or 2, **characterized in that** the connection plate (10) surrounds at least upstream and downstream, preferably over its entire periphery, the lower base (5) of the hopper (4).

5. The molding installation (1) according to claim 4, **characterized in that** the exhaust grooves (12) are located downstream and upstream of each of the distribution openings (6), said grooves (12) extending into a direction substantially parallel to the direction of displacement (X).

6. The molding installation (1) according to any one of the preceding claims, **characterized in that** the connection plate (10) is a part attached relative to the hopper (4) and **in that** a sealing means (13), such as a seal (14), is interposed between the lower distribution base (5) of the hopper (4) and the connection plate (10).

7. The molding installation (1) according to any one of the preceding claims, **characterized in that** the lower base (5) of the hopper (4) and the connection plate (10) each have a lower surface (5', 10'), these said lower faces (5', 10') being flush.

8. The molding installation (1) according to any one of the preceding claims, **characterized in that** the distribution plate (8) is formed by at least:
- a cassette (81) pierced with orifices (9) directly above which the molds (7) are disposed during the molding, and
- a frame (80) arranged to border the cassette (81) over its entire periphery,
the cassette (81) and the frame (80) including removable cooperation means (82) so that the cassette (81) and the frame (80) are removably secured.

9. The molding installation (1) according to claim 8, **characterized in that** the cassette (81) and the frame (80) each have an upper surface (80', 81') substantially flat, these said upper faces (80', 81') being substantially flush in the assembled position.
